(19) Europäisches Patentamt
European Patent Office
Office européen des brevets

(11) **EP 1 439 485 B1**

(12) **EUROPEAN PATENT SPECIFICATION**

(45) Date of publication and mention
of the grant of the patent:
**14.11.2007 Bulletin 2007/46**

(51) Int Cl.:
***G06K 9/20*** *(2006.01)*

(21) Application number: **03078520.8**

(22) Date of filing: **10.11.2003**

(54) **Segmenting a composite image via basic rectangles**

Segmentierung eines zusammengesetzten Bildes mittels Basis-Rechtecken

Segmentation d'une image composite au moyen de rectangles de base

(84) Designated Contracting States:
**AT BE BG CH CY CZ DE DK EE ES FI FR GB GR HU IE IT LI LU MC NL PT RO SE SI SK TR**

(30) Priority: **22.11.2002 EP 02079882**

(43) Date of publication of application:
**21.07.2004 Bulletin 2004/30**

(73) Proprietor: **Océ-Technologies B.V.**
**5914 CC Venlo (NL)**

(72) Inventor: **Jacobs, Johannes W.M.**
**3995 An Kessel (NL)**

(74) Representative: **van Meeteren, Arend Anthonie et al**
**Océ-Technologies B.V.**
**Corporate Patents**
**Postbus 101**
**5900 MA Venlo (NL)**

(56) References cited:
- **BELAID Y ET AL: "Item searching in forms: Application to French tax form" DOCUMENT ANALYSIS AND RECOGNITION, 1995, PROCEEDINGS OF THE THIRD INTERNATIONAL CONFERENCE ON, MONTREAL, QUE., CANADA 14-16 AUG. 1995, LOS ALAMITOS, CA, USA,IEEE COMPUT. SOC, US, 14 August 1995 (1995-08-14), pages 744-747, XP010231002 ISBN: 0-8186-7128-9**
- **HARE A R ET AL: "General test framework for straight-line detection by Hough transforms" PROCEEDINGS OF THE INTERNATIONAL SYMPOSIUM ON CIRCUITS AND SYSTEMS. (ISCS). CHICAGO, MAY 3 - 6, 1993, NEW YORK, IEEE, US, vol. 2, 3 May 1993 (1993-05-03), pages 239-242, XP010115147 ISBN: 0-7803-1281-3**
- **YOUNG SEAK PARK ET AL: "A HIERARCHICAL METHOD FOR BLOCK SEGMENTATION AND CLASSIFICATION OF GENERAL DOCUMENT IMAGES" SYSTEMS & COMPUTERS IN JAPAN, SCRIPTA TECHNICA JOURNALS. NEW YORK, US, vol. 24, no. 9, 1993, pages 84-96, XP000433079 ISSN: 0882-1666**

EP 1 439 485 B1

**Description**

The invention relates to a method of segmenting a composite image of pixels into a number of fields corresponding to layout elements of the image, the pixels having a value representing the intensity and/or color of a picture element, which method comprises finding initial field separators corresponding to areas of adjacent pixels of the image, having a predefined property indicative of a background of the image,

The invention further relates to a device for segmenting a composite image of pixels into a number of fields corresponding to layout elements of the image, the pixels having a value representing the intensity and/or color of a picture element, which device comprises an input unit for inputting an image, and a processing unit for finding initial field separators corresponding to areas of adjacent pixels having a predefined property indicative of a background of the image.

The invention further relates to a computer program product.

A method for page segmentation is known from the article "Flexible page segmentation using the background" by A. Antonacopoulos and R.T Ritchings in "Proceedings 12th International Conference on Pattern Recognition, Jerusalem, Israel, October 9-12, IEEE-CS Press, 1994, vol2, pp. 339-344". The image is represented by pixels that have a value representing the intensity and/or color of a picture element. The value is classified as background (usually white) or foreground (usually black, being printed space). The white background space that surrounds the printed regions on a page is analyzed. The background white space is covered with tiles, i.e. non-overlapping areas of background pixels.

The contour of a foreground field in the image is identified by tracing along the white tiles that encircle it, such that the inner borders of the tiles constitute the border of a field for further analysis. A problem of the method is that the borders of the fields are represented by a complex description which frustrates efficient further analysis.

It is an object of the invention to provide a method and device for segmenting an image which is more reliable and less complicated.

According to a first aspect of the invention the object is achieved with a method as defined in the opening paragraph, characterized the further steps of extending the field separators along at least one separation direction to an outer border of the image, constructing a tesselation grid of lines corresponding to the extended field separators, constructing a set of basic rectangles, a basic rectangle being an area enclosed by lines of the tesselation grid, and constructing the fields by connecting basic rectangles that are adjacent and not separated by an initial field separator.

According to a second aspect of the invention the object is achieved with a device as defined in the opening paragraph, characterized in that the processing unit is arranged for extending the field separators along at least one separation direction to an outer border of the image, constructing a tesselation grid of lines corresponding to the (extended) field separators, constructing a set of basic rectangles, a basic rectangle being an area enclosed by lines of the tesselation grid, and constructing the fields by connecting basic rectangles that are adjacent and not separated by an initial field separator.

According to a third aspect of the invention the object is achieved with a computer program product for performing the method.

Normally, an image contains field separators having one of at least two separation directions, usually horizontal and vertical, that connect and/or cross and together enclose the lay-out elements, such as text fields. The effect of the present method is that a tessellation grid is formed by lines based on extending the field separators to the outer borders. Every area enclosed but not sub-divided by the grid is called a basic rectangle, and further analysis is performed on these basic rectangles. The advantage of the set of basic rectangles is that fields can be easily constructed by connecting the basic rectangles. It is to be noted that calculation on the level of basic rectangles is computationally substantially more efficient than connecting individual pixels or small pixel based objects.

The invention is based on the following recognition. Segmentation is the process of identifying objects in the image at a relevant hierarchical level. For example in a newspaper page a hierarchy could be a lowest level of pixels, then a level of objects of connected pixels (e.g. characters or separators), then text lines, then text fields, then columns and finally articles. The inventors have seen that for finding fields in a structured image a building block that is just below the required level of fields can be constructed by a transformation from the lower level of field separators to a building block level. The basic rectangles are the building blocks that can be efficiently constructed via the tessellation grid. The step of connecting basic rectangles to an area takes place on the building block level. Finally a transformation from the building block level to the field level is achieved by consolidating basic rectangles into fields on the basis of the original connection points of field separators or nodes of the image. Hence, the construction of basic rectangles provides a convenient way of determining building blocks of fields during segmenting a digital image which predominantly has polygon fields.

In an embodiment of the method the step of constructing the set of basic rectangles comprises constructing a matrix map representing the tessellation grid by a two-dimensional array of elements that each represent either a basic rectangle or a line segment of the tessellation grid, an element having a first predefined value for representing a line corresponding to a field separator or a further different value for representing a basic rectangle or a line corresponding to an extended field separator. The advantage is that the matrix map comprises the basic rectangles and the boundaries between the basic rectangles. The matrix map can be processed easily because it represents the image on a level of building blocks of fields without geometric details that would otherwise complicate calculations.

In an embodiment of the method, nodes are defined at points in the original image at positions where the field separators connect and at corresponding positions in the tesselation grid, and the step of constructing the fields comprises constructing a node matrix corresponding to the tessellation grid and including elements referring to nodes in the tessellation grid.

The advantage is that the node matrix comprises references to the nodes in a geometric representation. The node matrix allows an easy transformation of the level of building blocks of fields, i.e. basic rectangles, to a representation of the fields by nodes.

Further preferred embodiments of the device according to the invention are given in the further claims.

These and other aspects of the invention will be apparent from and elucidated further with reference to the embodiments described by way of example in the following description and with reference to the accompanying drawings, in which

Figure 1 shows an overview of an exemplary segmentation method,
Figure 2 shows a part of a sample Japanese newspaper,
Figure 3 shows the merging of objects along a single direction,
Figure 4 shows segmentation and two directional merging of objects,
Figure 5 shows construction of a maximal rectangle from white runs,
Figure 6 shows construction of maximal white rectangles,
Figure 7 shows cleaning of overlapping maximal white rectangles,
Figure 8 shows a graph on a newspaper page,
Figure 9 shows two types of intersection of maximal rectangles,
Figure 10 shows a device for segmenting a picture,
Figure 11 shows a diagram of a method for defining fields on the basis of field separators,
Figure 12 shows a representation of an image,
Figure 13 shows a tessellation grid on an image,
Figure 14 shows a matrix map of the tessellation grid,
Figure 15 shows a single connected area in a matrix,
Figure 16 shows the contour of a connected area, and
Figure 17 shows a node matrix.

The Figures are diagrammatic and not drawn to scale. In the Figures, elements which correspond to elements already described have the same reference numerals.

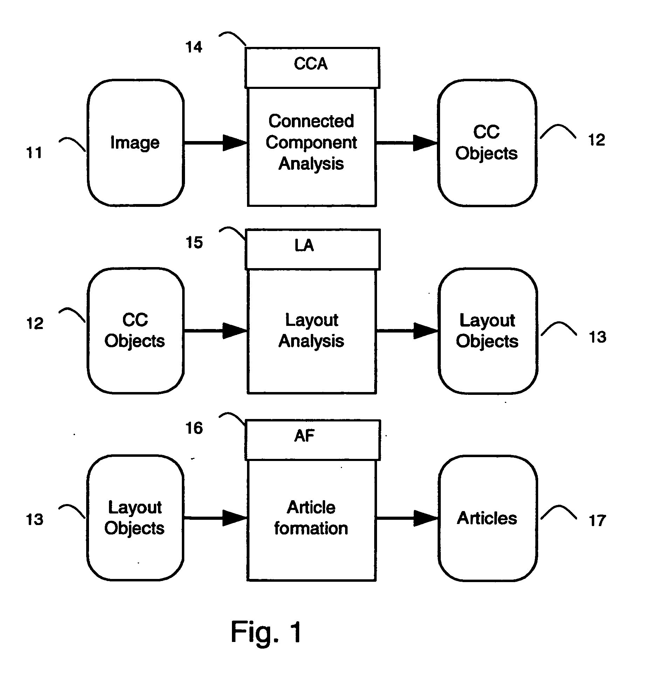

Figure 1 shows an overview of an exemplary segmentation method, showing three basic steps from known segmentation systems. The input image 11 is processed in a CCA module 14 that analyses the pixels of the image using Connected Component Analysis. First an original picture that may be a black-and-white, grayscale or coloured document, e.g. a newspaper page, is scanned, preferably in gray scale. Grayscale scanned pictures are halftoned for assigning a foreground value (e.g. black) or a background value (e.g. white) to each pixel. The CCA module 14 finds foreground elements in the image by detecting connected components (CC) of adjacent pixels having similar properties. An example of the first steps in the segmentation process are for instance described in US 5,856,877. The CCA module produces as output CC Objects 12, that are connected components of connected foreground pixels. An LA module 15 receives the CC Objects 12 as input and produces Layout Objects 13 by merging and grouping the CC Objects to form larger layout objects such as text lines and text blocks. During this phase, heuristics are used to group layout elements to form larger layout elements. This is a logical step in a regular bottom-up procedure. An AF module 16 receives the Layout Objects 13 as input and produces Articles 17 as output by article formation. In this module, several layout objects that constitute a larger entity are grouped together. The larger entity is assembled using layout rules that apply to the original picture. For example in a newspaper page the AF module groups the text blocks and graphical elements like pictures to form the separate articles, according to the layout rules of that specific newspaper style. Knowledge of the layout type of the image, e.g. Western type magazine, Scientific text or Japanese article layouts, can be used for a rule-based approach of article formation resulting in an improved grouping of text blocks.

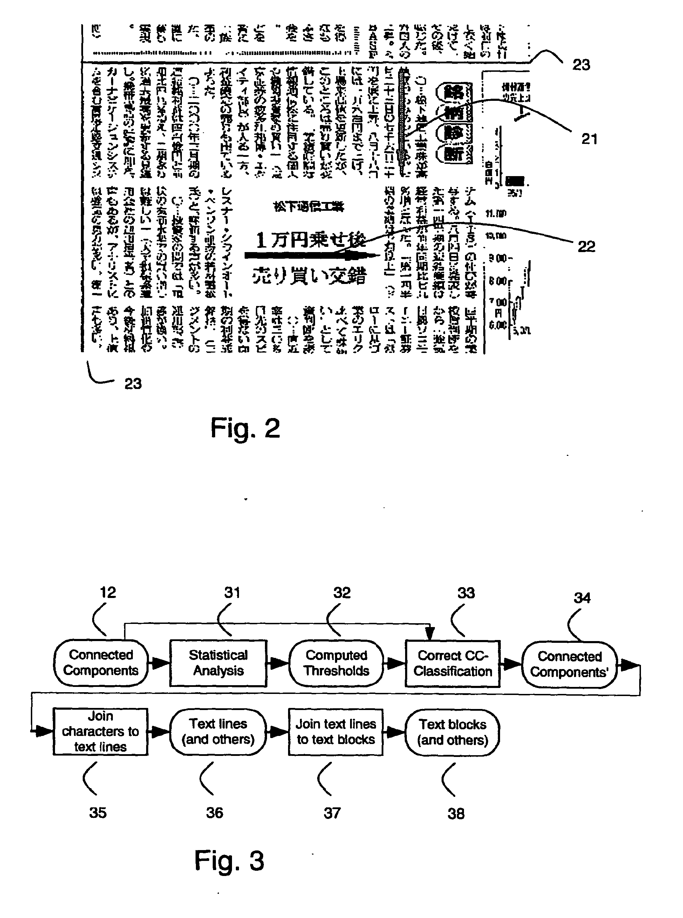

According to the invention additional steps are added to the segmentation as described below. The steps relate to segmentation of the image into fields before detecting elements within a field, i.e. before forming layout objects that are constituted by smaller, separated but interrelated items. Figure 2 shows a sample Japanese newspaper. Such newspapers have a specific layout that includes text lines in both horizontal reading direction 22 and vertical reading direction 21. The problem for a traditional bottom-up grouping process of detected connected components is that it is not known in which direction the grouping should proceed. Hence the segmentation is augmented by an additional step of processing the background for detecting the fields in the page. Subsequently the reading direction for each field of the Japanese paper is detected before the grouping of characters is performed.

In an embodiment of the method, separator elements, e.g. black lines 23 for separating columns are detected and converted into background elements. With this option, it is possible to separate large elements of black lines 23 containing vertical and horizontal lines that are actually connected into different separator elements. In Japanese newspapers, lines are very important objects for separating fields in the layout. It is required that these objects are recognized as lines along separation directions. Without this option, these objects would be classified as graphics. Using the option the lines can be treated as separator elements in the different orientations separately for each separation direction.

Figure 3 shows a basic method of merging objects in a single direction. The Figure depicts the basic function of the LA module 15 for finding the layout objects oriented in a known direction, such as text blocks for the situation that the reading order is known. Connected components 12 are processed in a first, analysis step 31 by statistical analysis resulting in computed thresholds 32. In a second, classification step 33 the CC-classification is corrected resulting in the corrected connected components 34, which are processed in a third, merging step 35 to join characters to text lines, resulting in text lines and other objects 36. In a fourth, text merging step 37 the text lines are joined to text blocks 38 (and possibly other graphical objects). According to the requirements for Japanese news papers the traditional joining of objects must be along at least two reading directions, and the basic method described above must be improved therefor.

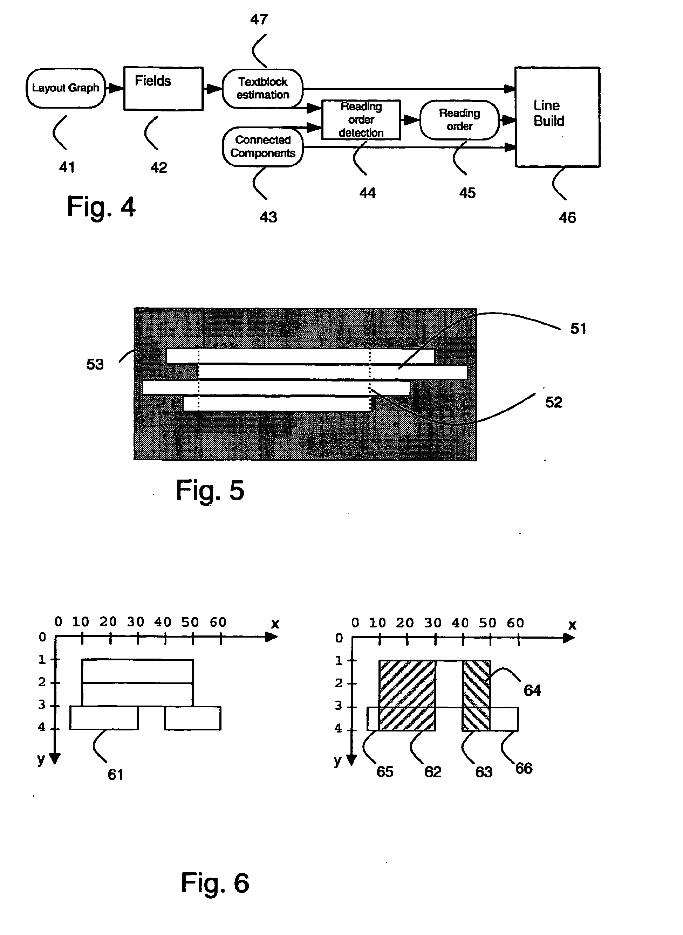

Figure 4 shows segmentation and two directional joining of objects. New additional steps have been added compared to the single directional processing in Figure 3. In a first (pre-) processing step a graph 41 of the image is constructed. The construction of the graph by finding field separators is described below. In the graph, fields are detected in field detection step 42 by finding areas that are enclosed by edges of the graph. The relevant areas are classified as fields containing text blocks 47. In the text block 47 (using the connected components 43 or corrected connected components 34 that are in the text block area) the reading order 45 is determined in step 44. The reading direction detection is based upon the document spectrum. Using the fields of the text blocks 47, the contained connected components 43 and the reading order 45 as input, the Line Build step 46 joins the characters to lines as required along the direction found.

Now the constructing of the graph 41 is described. A graph-representation of a document is created using the background of a scan. Pixels in the scan are classified as background (usually white) or foreground (usually black). Because only large areas of white provide information on fields, small noise objects are removed, e.g. by down-sampling the image. The down-sampled image may further be despeckled to remove single foreground (black) pixels.

The next task is to extract the important white areas. The first step is to detect so-called white runs, one pixel high areas of adjacent background pixels. White runs that are shorter than a predetermined minimal length are excluded from the processing.

Figure 5 shows, as an example, four horizontal runs 51 of white pixels, that are adjacent in vertical direction. Foreground area 53 is assumed to have foreground pixels directly surrounding the white runs 51. A "maximal white rectangle" is defined as the largest rectangular area that can be constructed from the adjacent white runs 51, hence a rectangular white area that can not be extended without including black (foreground) pixels. A maximal white rectangle 52 is shown based on the four white runs 51 having a length as indicated by the vertical dotted lines and a width of 4 pixels. When a white rectangle can not be extended it has a so-called maximal separating power. Such a rectangle is not a smaller part of a more significant white area. Hence the rectangle 52 is the only possible maximal rectangle of width 4. Further rectangles can be constructed of width 3 or 2. A further example is shown in Figure 6.

The construction of white rectangles is done separately in different separation directions, e.g. horizontal and vertical white rectangles. Vertical white rectangles are detected by rotating the image, and detecting horizontal white runs for the rotated image. It is noted that depending on the type of image or application also other separation directions may be selected such as diagonal.

An algorithm for constructing maximal white rectangles is as follows. The input of the algorithm consists of all horizontal one pixel high white runs (WR) detected from a given image. Each white run is represented as a rectangle characterized by a set of coordinates $((x_1,y_1),(x_2,y_2))$, where and $x_1$ and $y_1$ are coordinates of its top left corner and $x_2$, $y_2$ are the coordinates of its bottom right corner. Each white run present in the active ordered object INPUT LIST is tested on an *extension possibility*. The *extension possibility* is formulated in the condition whether a given WR, labeled by $p$, can produce a maximal white rectangle (MWR) or not. If the *extension possibility* is FALSE, $p$ is already a maximal one, $p$ is deleted from the active INPUT LIST and written to the active RESULT LIST. If the *extension possibility* is TRUE, the test for extension is repeated until all MWRs initiated by $p$ have been constructed. Then $p$ is deleted from the INPUT LIST and all MWRs obtained from $p$ are written to the active RESULT LIST. When all white rectangles from the INPUT LIST have been processed, the RESULT LIST will contain all MWRs. To increase the efficiency of the algorithm, a sort on the y value is applied to the INPUT LIST. First, the algorithm is applied for horizontal WRs, i.e. for white runs with width larger than height. And after a 90° turn of the image it can be applied to vertical WRs.

In an embodiment the algorithm for constructing the maximal rectangles is as follows. The rectangle data are stored as a linked list, with, at least, the coordinates of the rectangle vertices contained in it. The INPUT and RESULT LISTS are stored as a linked list too, with, at least, three elements, such as the number of white rectangles, and pointers on the first and the last element in the linked list. The following steps are executed: Activate INPUT LIST; Initiate RESULT LIST; Initiate BUFFER for temporary coordinates of the selected rectangle. Start from the first white rectangle, labeled by $p_1$, out of the active ordered INPUT LIST. The next white rectangle on the list is labeled by $p_2$. For each white rectangle on the INPUT LIST examine if $p_1$ has *extension possibility.* For the active white rectangle $p_1$, find the first one labeled by $p_{nj}$, j=1,...,l, on the active ordered INPUT LIST, which satisfies

$$y_2(p_1) = y_1(p_{nj})$$

$$x_1(p_{nj}) \leq x_2(p_1)$$

$$x_2(p_{nj}) \geq x_1(p_1)$$

This search results in the set $\{p_{n1}, p_{n2}, ....., p_{nl}\}$. Only if the set $\{p_{n1}, p_{n2}, ....., p_{nl}\}$ is not empty, $p_1$ is said to have *extension possibility.*

- If $p_1$ does not have an *extension possibility,* then $p_1$ is a maximal white rectangle. Write $p_1$ to the RESULT LIST, and remove p1 from the INPUT LIST, and proceed with $p_2$.
- If $p_1$ is extendible, then apply the extension procedure to $p_1$. Proceed with $p_2$. We note here, that $p_1$ can have an *extension possibility* while being maximal itself.

The Extension Procedure is as follows. Suppose $p_1$ has an *extension possibility,* then there is the set $\{p_{n1}, p_{n2}, ..., p_{nl}\}$. The extension procedure is applied to each element of $\{p_{n1}, p_{n2}, ..., p_{nl}\}$ consistently. For the white rectangle $p_1$ which is extendible with rectangle $p_{nj}$, j = 1,...,l, construct a new rectangle $p_{1,nj}$ with coordinates:

$$x_1(p_{1,nj}) = \max \ \{ \ x_1(p_1), \ x_1(p_{nj}) \ \},$$

$$x_2(p_{1,nj}) = \min \ \{ \ x_2(p_1), \ x_2(p_{nj}) \ \}$$

$$y_1(p_{1,nj}) = y_1(p_1),$$

$$y_2(p_{1,nj}) = y_2(p_{nj})$$

Write the coordinates of $p_{1,nj}$, j=1,...,l to the "coordinates" buffer. Repeat the test on *extension possibility* now for $p_{1,nj}$. If the test is TRUE, $p_{1,nj}$ is maximal. Write $p_{1,nj}$ to the RESULT LIST, otherwise, extend $p_{1,nj}$.

Before applying the extension procedure to $p_{1,nj}$, we check $p_1$ and $p_{nj}$ for *absorption effect.* The test of $p_1$ and $p_{nj}$ for *absorption effect* with $_{p1,nj}$ is as follows. By *absorption effect* we mean the situation, in which $p_1$ ($p_{nj}$) or both is (are) completely contained in $p_{1,nj}$. In coordinates this means:

$$x_1(p_{1,nj}) \leq x_1(p_k),$$

$$x_2(p_{1,nj}) \geq x_2(p_k), \quad \text{where } k = 1, n_j, \ j=1,...,l.$$

where k= 1,$n_j$, j=1,...,l.

If the condition is TRUE for $p_1$, then $p_1$ is absorbed by $p_{1,nj}$. Remove $p_1$ from the INPUT LIST. If the condition is TRUE for $p_{nj}$, then $p_{nj}$ is absorbed by $p_{1,nj}$. Remove $p_{nj}$ from the INPUT LIST.

The algorithm assumes that the rectangle is wider than it is high, and thus the rectangles are primarily horizontal. To construct MWRs in vertical direction, the original binary image is rotated by 90° clockwise. The algorithm mentioned above is repeated for the rotated image. As a result, all vertical MWRs for the original image are constructed.

Figure 6 shows construction of maximal white rectangles. The pixel coordinates are displayed along a horizontal x axis and a vertical y axis. Four white runs 61 are shown left in the Figure. The white runs (WR) are described as rectangles with the coordinates of their upper and bottom corners correspondingly:

$WR_1$ : ((10,1),(50,2)),
$WR_2$ : ((10,2),(50,3)),
$WR_3$ : ((5,3),(30,4)),
$WR_4$ : ((40,3),(60,4)).

All maximal white rectangles from these white runs are constructed. The resulting five maximal white rectangles (MWR) are shown in the right part of the Figure as indicated by 62, 63, 64, 65 and 66. The five MWR shown are the complete set of MWR for the WR given in the left part of the Figure. A construction algorithm is as follows.

Let the INPUT LIST contain the four white runs 61. The first element from the INPUT LIST is $WR_1$((10,1),(50,2)). Label $WR_1$ as $p_1$. Examine $p_1$ on the *extension possibility* as described above. The first candidate for extension is $WR_2$ ((10,2),(50,3)). Label $WR_2$ as $p_{n1}$. Extend $p_1$ with $p_{n1}$ according to the formula for extension above, which gives a new rectangle $p_{1,n1}$ with the coordinates ((10,1),(50,3)). Test $p_1$ and $p_{n1}$ on the *absorption effect with* $p_{1,n1}$. As follows from absorption test both $p_1$ and $p_{n1}$ are absorbed by $p_{1,n1}$. Therefore, delete $p_1$ and $p_{n1}$ from the INPUT LIST. Proceed with $p_{1,n1}$. Test $p_{1,n1}$ on the *extension possibility,* which gives the first candidate $WR_3$ ((5,3),(30,4)). Label $WR_3$ as $p_{t1}$. Extend $p_{1,n1}$ with $p_{t1}$ according to the extension formula. As a result, we obtain a new rectangle $p_{(1,n1),t1}$ with the coordinates ((10,1),(30,4)). Test $p_{1,n1}$ with $p_{t1}$ on the absorption effect with $p_{(1,n1),t1}$. The test fails.

Repeat the test on *extension possibility* for $p_{(1,n1),t1}$ The test fails, i.e. $p_{(1,n1),t1}$ has no *extension possibility.* It means that $p_{(1,n1),t1}$ is maximal. Write $p_{(1,n1),t1}$ with the coordinates ((10,1),(30,4)) to the RESULT LIST.

Proceed again with $p_{1,n1}$ and test it on *extension possibility.* The second candidate $WR_4$ ((40,3),(60,4)) is found. Label $WR_4$ as $p_{t2}$. Extend $p_{1,n1}$ with $p_{t2}$ according to the extension formula. As a result, we obtain a new rectangle $p_{(1,n1),t2}$ with the coordinates ((40,1),(50,4)).

Test $p_{1,n1}$ with $p_{t2}$ on the absorption effect with $p_{(1,n1),t2}$ . The test fails, i.e. no absorption. Repeat test on *extension possibility for* $p_{(1,n1),t2}$ and the test fails, i.e. $p_{(1,n1),t2}$ has no *extension possibility.* It means that $p_{(1,n1),t2}$ is maximal. Write $p_{(1,n1),t2}$ with the coordinates ((40,1),(50,4)) to the RESULT LIST.

Test $p_{1,n1}$ again on *extension possibility.* The test fails and $p_{1,n1}$ is maximal. Write $p_{1,n1}$ with the coordinates ((10,1), (50,3)) to the RESULT LIST.

Return to the INPUT LIST. The INPUT LIST on this stage contains two write runs, i.e. $WR_3$ : ((5,3),(30,4)), $WR_4$ : ((40,3), (60,4)). Start from $WR_3$, and label it as $p_2$. Repeat test on *extension possibility* for $p_2$. The test fails, $p_2$ is maximal. Write $p_2$ with the coordinates ((5,3),(30,4)) to the RESULT LIST. Remove $p_2$ from the INPUT LIST. Proceed with $WR_4$ and label it as $p_3$. Test on *extension possibility* for $p_3$ gives us that $p_3$ is maximal. Write $p_3$ with the coordinates ((40,3),(60,4)) to the RESULT LIST. Remove $p_3$ from the INPUT LIST. Finally, the RESULT LIST contains five maximal white rectangles, i.e. $MWR_1$ : ((10,1),(50,3)) indicated in Figure 6 as 64, $MWR_2$: ((10,1),(30,4)) indicated as 62, $MWR_3$: ((40,1),(50,4)) indicated as 63, and $MWR_4$ : ((5,3),(30,4)) as 65, $MWR_5$ : ((40,3),(60,4)) as 66.

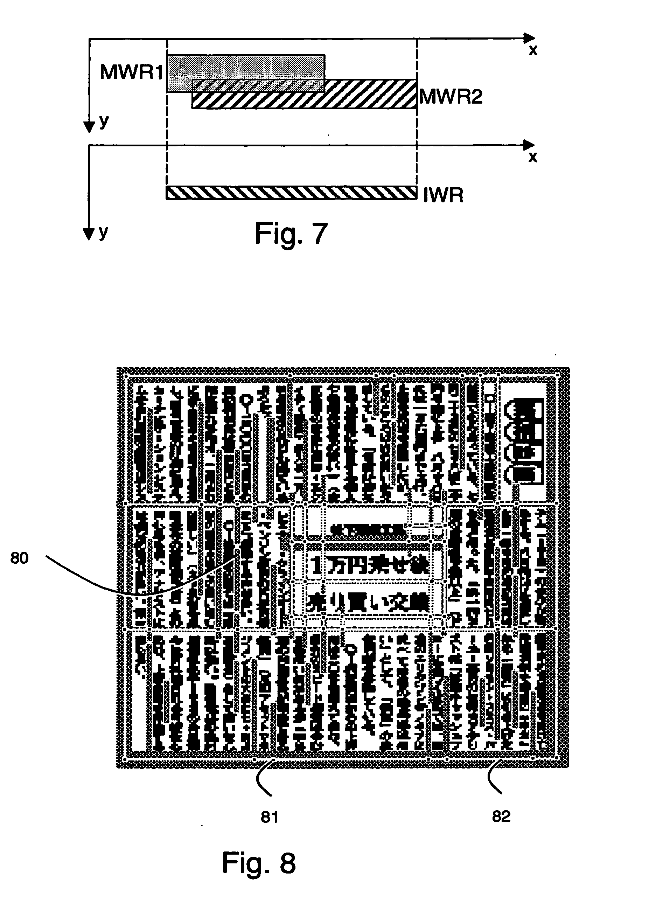

Figure 7 shows a next step in the method according to the invention, namely a cleaning step of overlapping maximal white rectangles. In the cleaning step, plural overlapping maximal white rectangles are consolidated into a single so-called "Informative Maximal Rectangle" (IWR) that combines the most relevant properties of the original maximal white rectangles, as discussed below in detail.

The cleaning may further include steps like checking on size and spatial relation. The upper part of Figure 7 shows, as an example, two maximal white rectangles MWR1 and MWR2. The pair is consolidated into a single Informative White Rectangle IWR in the cleaning step as shown in the lower part of the Figure. The process of detecting overlap and consolidating is repeated until no relevant pairs can be formed anymore. A criterion for forming pairs may be the size of the overlap area.

Further cleaning steps may include removing thin or short rectangles or rectangles that have an aspect ratio below a certain predefined value. The criteria for removing are based on the type of image, e.g. a width below a predefined number of pixels indicates a separator of text lines and is not relevant for separating fields, and a length below a certain value is not relevant in view of the expected sizes of the fields.

An algorithm for the cleaning step is as follows. The start of the cleaning procedure is the whole set of MWRs constructed as described above with reference to Figures 5 and 6. The cleaning procedure is applied to discard non-informative MWRs. For this reason a measure of non-informativeness is defined. For example a long MWR is more informative than a short one. A low aspect ratio indicates a more or less square rectangle that is less informative. Further, extremely thin rectangles, which for instance separate two text lines, must be excluded. First, all MWRs are classified as being horizontal, vertical or square by computing the ration between their heights and widths. Square MWRs are deleted because of their non-informativeness. For the remaining horizontal and vertical MWRs the cleaning technique is applied which consists of three steps:

- Each MWR with a length or width below a given value is deleted.
- Each MWR with aspect ratio (AR), defined as the ratio of the longer side length divided by the shorter side length, below a given value is deleted.
- For each pair of overlapping horizontal (or vertical) $MWR_1$ $((x_1,y_1),(x_2,y_2))$ and horizontal (or vertical) $MWR_2$ $((a_1, b_1,),(a_2,b_2))$, an informative white rectangle IWR is constructed with the following coordinates:

(a) Horizontal overlap:

$$x_1 = \min \{ x_1, a_1 \},$$

$$y_1 = \max \{ y_1, b_1 \},$$

$$x_2 = \max \{ x_2, a_2 \},$$

$$y_2 = \min \{ y_2, b_2 \}.$$

(b) Vertical overlap:}

$$x'_1 = \max \{ x_1, a_1 \},$$

$$y'_1 = \min \{ y_1, b_1 \},$$

$$x'_2 = \min \{ x_2, a_2 \},$$

$$y'_2 = \max \{ y_2, b_2 \}.$$

This process is repeated for all pairs of overlapping MWRs. The set of MWRs now comprises Informative White Rectangles IWRs. These IWRs form the starting point for an algorithm for segmentation of the image into fields corresponding to the lay-out elements. The IWRs are potential field separators and are therefore called "separating elements". Using the IWRs, the algorithm constructs a graph for further processing into a geographical description of the image.

Figure 8 shows such a graph on a newspaper page. The picture shows a down-sampled digital image 80 of a newspaper page. The original text is visible in black in a down-sampled version corresponding to Figure 2. The informative rectangles IWR constituting separating elements are shown in gray. For the construction of the graph, intersections of separating elements constituted by horizontal and vertical white IWRs are determined. The intersection point of two IWRs is indicated by a small black square representing a vertex or vertex 81 in the graph. Edges 82 that represent lines that separate the fields in the page are constructed by connecting pairs of vertices 81 via "field separators". The edges 82 of the graph are shown in white. The distance between the two vertices of an edge, i.e. the length, is assigned as weight to the edge for further processing. In an alternative embodiment a different parameter is used for assigning the weight, e.g. the colour of the pixels. An algorithm for constructing the graph is as follows.

At the beginning, the following notation and definitions for IWRs is given. Let $R = \{r_1,...,r_m\}$ be the non-empty and finite set of all IWRs obtained from a given image l, where each IWR is specified by its x- and y- coordinates of top left corner and bottom right corner ( $(x_1^{(\tau)}, y_1^{(\tau)}, (x_2^{(\tau)}, y_2^{(\tau)} )$ ), $\tau = 1,2,...$, m respectively. Each rectangle $r_\tau$ is classified as horizontal, vertical or square based on the ratio of its height and width. $H = \{h_1,...,h_l\}$, $V = \{ v_1,...,v_k\}$, and $S = \{s_1,..., s_d\}$ denote the subsets of horizontal, vertical and square IWRs, respectively, such that

$$H \cup V \cup S = R$$

and m=l+k+d, and

$$H \cap V = \varnothing, \quad V \cap S = \varnothing, \quad H \cap S = \varnothing$$

where it is assumed that

$$H \neq \varnothing, \quad V \neq \varnothing.$$

Further the contents of S are ignored and only the subsets H and V are used. This is based on the consideration, that in most cases white spaces that form the border of text or non-text blocks are oblong vertical or horizontal areas. Let h be part of H with coordinates $((x_1, y_1), (x_2, y_2))$ and v in V with coordinates $((a_1, b_1), (a_2, b_2))$. Then h and v have overlap if

$$\begin{cases} x_1 \leq a_2 \\ y_1 \leq b_2 \\ x_2 \geq a_1 \\ y_2 \geq b_1 \end{cases}$$

By the intersection point of h and v in case of overlap, we take the unique point P defined by the coordinates:

$$\begin{cases} x_P = \tfrac{1}{2} \left( \max\{x_1, a_1\} + \min\{x_2, a_2\} \right), \\ y_P = \tfrac{1}{2} \left( \max\{y_1, b_1\} + \min\{y_2, b_2\} \right) \end{cases}$$

For IWRs only two from all possible types of overlap occur, namely overlap resulting in a rectangle and overlap resulting in a point. Line overlap cannot occur, because this would be in contradiction with the concept of the MWRs.

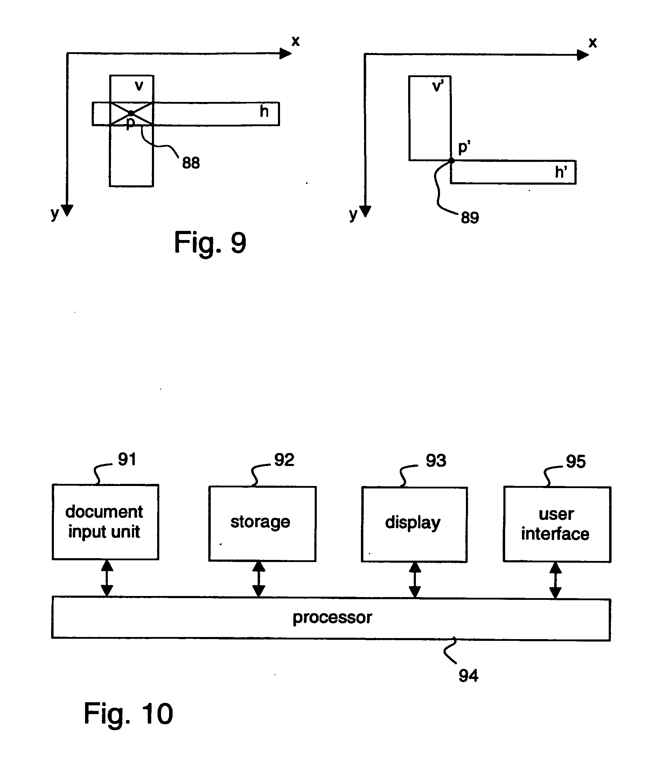

Figure 9 shows two types of intersection of maximal rectangles. For constructing the graph the intersection points of vertical and horizontal informative maximal rectangles are determined to find the position of vertices of the graph, i.e. to determine the exact coordinates of the vertices. The left part of the Figure shows a first type of intersection of vertical IWR v and a horizontal IWR h, which results in a rectangular area 88 with a center of intersection point P. The right part of the Figure shows a second type of intersection of a vertical IWR v and a horizontal IWR h, that results in a single intersection point 89 with a center of intersection at P'.

An algorithm for constructing the graph based on the intersection points is as follows.

$P = \{p_1, ..., p_N\}$ denotes the set of all intersection points of vertical IWRs and horizontal IWRs where each p in P is specified by its x- and y- coordinates $(x_p, y_p)$, where $p = 1, ..., N$. Let the set P be found, and G=(X,A) an undirected graph having correspondence to P. The graph G=(X,A) consists of a finite number of vertices X which are directly related to the intersection points and a finite number of edges A which describe the relation between intersection points. Mathematically this is expressed as

$$G(P) = (X(P), A(P \times P)),$$

$$P: H \times V \rightarrow \{x_P, y_P\},$$

where

$$X \equiv \{1, ...., N\}$$

and

$$A = (\{ 1, \ldots, N \} \times \{ 1, \ldots, N \})$$

with

$$A(i,j) = \begin{cases} \infty, \text{ if } i \text{ and } j \text{ are not 4-chain connected,} \\ d_{ij}, \text{ if } i \text{ and } j \text{ are 4-chain connected} \end{cases}$$

where $d_{ij}$ indicates the Euclidean distance between points i and j, and where 4-chain connected means that the vertices of a rectangular block are connected in four possible directions of movement. In the above two points i and j are 4-chain connected if they can be reached by walking around with the aid of 4-connected chain codes with min $d_{ij}$ in one direction.

The graph as constructed may now be further processed for classifying the areas within the graph as text blocks or a similar classification depending on the type of picture. In an embodiment the graph is augmented by including foreground separators, e.g. black lines or patterned lines such as dashed/dotted lines, in the analysis. Also, edges of photos or graphic objects which are detected can be included in the analysis.

The present segmenting method may also include a step of removing foreground separators. First, foreground separators are recognized and reconstructed as single objects. The components that constitute a patterned line are connected by analyzing element heuristics, spatial relation heuristics and line heuristics, i.e. building a combined element in a direction and detecting if it classifies as a line. A further method for reconstructing a solid line from a patterned line is down-sampling and/or using the Run Length Smoothing Algorithm (RLSA) as described by K.Y. Wong, R.G. Casey, F.M. Wahl in "Document analysis system" IBM J. Res. Dev 26 (1982) 647-656. After detecting the foreground separators they are replaced by background pixels. The effect is that larger maximal white rectangles can be constructed, or supporting any other suitable method using the background pixel property for finding background separators.

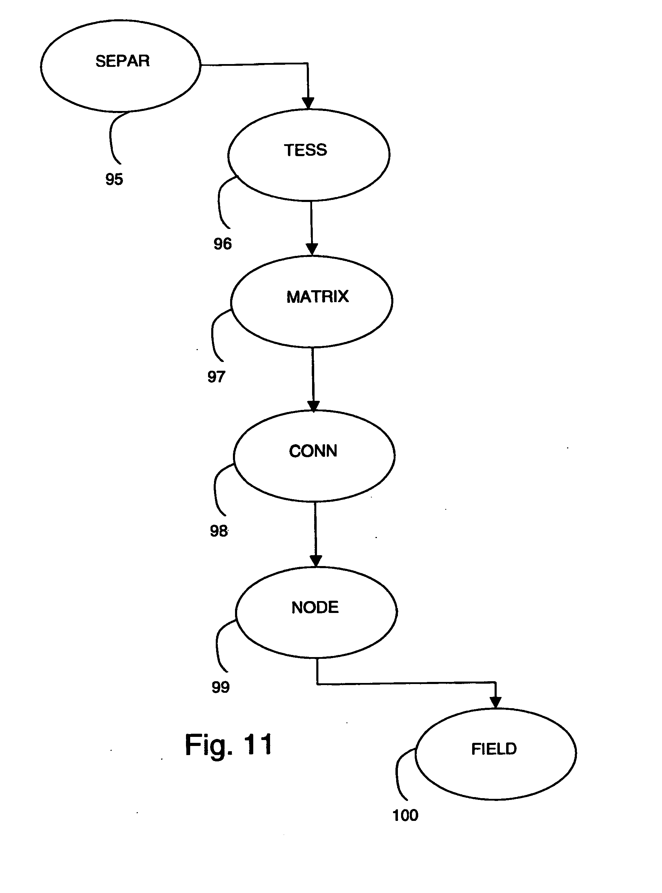

Figure 11 shows a diagram of a method of defining fields on the basis of field separators.

Basically, the task of this method is to define fields in an image, wherein fields are defined as areas containing interrelated foreground elements, e.g. text blocks in a newspaper image. The fields in an image are separated by field separators that are understood to be geometrical lines having a direction and zero thickness. Field separators correspond to areas of connected background pixels, that have an oblong shape in a separation direction, usually horizontal or vertical. The crossing points of the field separators are called nodes. According to the method, first the field separators in the image are detected, and then the fields are determined on the basis of an analysis of the field separators.

In a SEPAR step 95 the image is analyzed to derive field separators. The field separators are preferably based on the analysis using maximal white rectangles as described above. The analysis using maximal white rectangles delivers a graph having edges and vertices where the edges connect. For the method of the present invention, the field separators and nodes correspond to the edges and the vertices of the graph, respectively. Also, other suitable methods may be used for determining field separators. It is noted that the process of deriving separators may already have been completed earlier, or the image is a representation of a structure on a higher level that already shows separators.

The field separators thus found may slightly deviate from the basic horizontal and vertical directions, e.g. as a consequence of scan misalignments, and such could lead to errors in the further processing steps. Therefore, a "snap to grid" step, forcing small deviations of the X- or Y-coordinate of a field separator to zero, may be added to the process at this point.

In a TESS step 96 a transformation to a building block level is performed. In this step the image is divided into basic rectangles that form the building blocks of fields in the image, by extending the field separators until they meet the outer border of the image. In this way a so-called tesselation grid is formed, and the areas enclosed by the (extended) field separators are defined as basic rectangles.

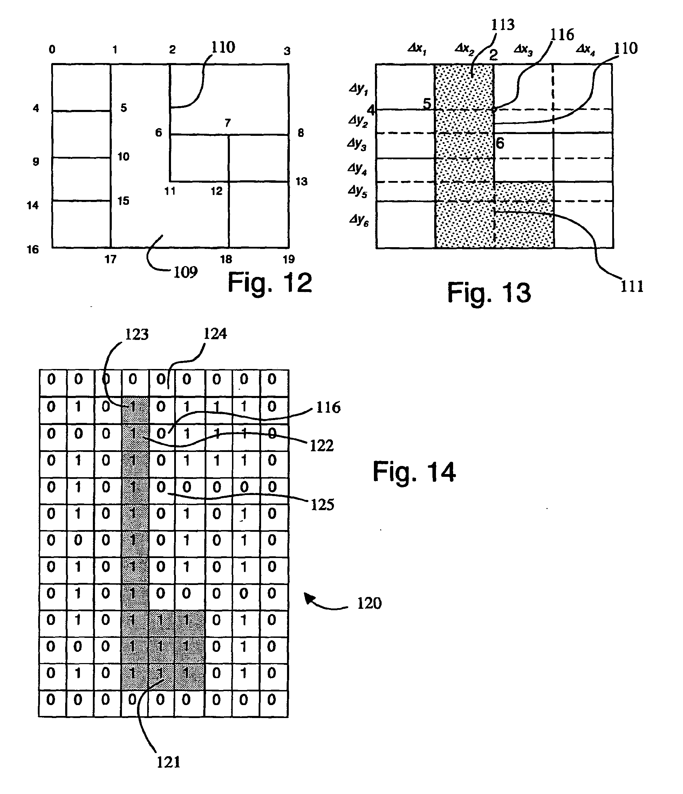

The generation of the tessellation grid is explained in detail below with reference to Figures 12 and 13.

Basically, the method now connects the basic rectangles that are not separated by a field separator into fields. A particularly efficient way to perform this process includes the following steps.

In a MATRIX step 97 a new representation of the tesselated image is made on the form of a matrix map. In the matrix map, the basic rectangles and the tesselation grid elements are represented by the matrix elements. This step is further described below with reference to Figure 14.

In a CONN step 98 the basic rectangles are connected to form areas of connected basic rectangles. Basic rectangles are considered connected if they are separated by an extended part of a line, and not connected if separated by a line part associated to a field separator. A connected component algorithm is used in this step as described below with reference to Figure 14.

The sets of connected basic rectangles as determined in this step now correspond to the fields of the original image.

In a NODE step 99 the original nodes that border the fields found in the CONN step are retrieved for defining the positions of the fields in the original image.

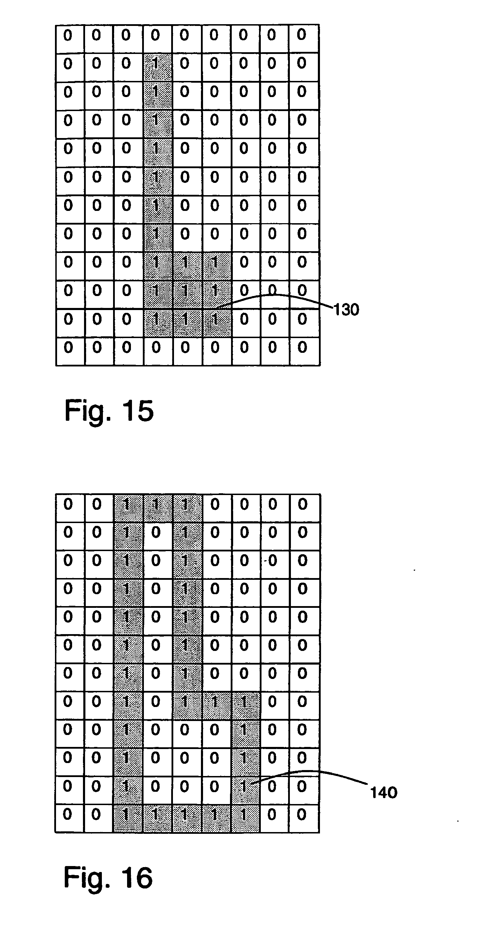

Finally in FIELD step 100 the original nodes retrieved in the previous step are combined to a data structure defining a field for each area of connected basic rectangles. This amounts to a transformation from the matrix representation back to the pixel domain. This step is further described below with reference to Figures 15 - 17.

The TESS step of the algorithm will now be described in greater detail.

Figure 12 shows a representation of an image. The image is represented by lines associated to field separators 110 that enclose the fields 109. Field separators 110 represent background, usually white in a newspaper, and are shown as black lines. The foreground areas between the field separators, such as field 109 in this example, are to be defined as fields. The task to be performed is identifying the fields in the image.

Figure 13 shows a tessellation grid on an image, based on the input image of Figure 12. For generating the tessellation grid, all field separators (uninterrupted lines 110 in Figure 13) have been extended up to the borders of the image. As a result, the image is subdivided by vertical lines in 4 X-segments $\Delta X_1$ to $\Delta X_4$ and by horizontal lines 6 Y-segments $\Delta Y_1$ to $\Delta Y_6$. Extensions of field separators 110 are indicated by dashed lines 111. For example, nodes 2 and 6 are actual nodes of a field separator and the extension causes a virtual node 116 in between nodes 2 and 6. Two basic rectangles are formed in the area directly to the right of the line between nodes 2 and 6. Every rectangle in the tessellation grid formed by the lines based on extending the field separators is a so-called basic rectangle. For example the basic rectangle 113 is part of a connected area as indicated by the shaded area, which is constituted by every basic rectangle not separated from basic rectangle 113 by a field separator. The area of connected basic rectangles can be constructed easily as is described below with reference to Figure 14.

It is noted that the approach may be extended to areas, which are not substantially rectangular structures. Piecewise linearization and/or elastically deformation of the planar graph can be applied for processing images containing "curved bordered" areas.

In the MATRIX step of the basic algorithm the tesselated image as shown in Figure 13 is converted into a matrix representation, in which every basic rectangle and every line segment is associated with a matrix element. The tesselated image spans 4 basic rectangles and 5 vertical lines associated with field separators when traversed in horizontal direction and accordingly, the matrix representation has 9 columns. The tesselated image spans 6 basic rectangles and 7 horizontal lines when traversed in vertical direction and accordingly, the matrix representation has 13 rows.

Initially, every matrix element is given the value 1. Then, all matrix elements are systematically checked for being associated to a field separator of the original image and, if so, are changed in value to 0. Thus, a foreground element is represented by a 1 and background element by a 0.

Alternatively, matrix elements may be changed to 0 by checking the list of field separators, which would normally result in less operations.

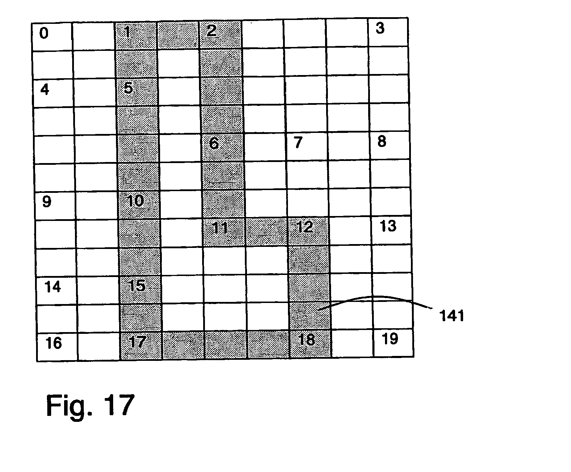

Figure 14 shows the resulting matrix map 120 of the image in Figure 13. E.g., the basic rectangle 113 is now reduced to a single element 123 of the matrix and extended line segment 111 is now element 121 of the matrix. Nodes 2 and 6 are represented by elements 124 and 125. Also shown is the matrix element corresponding to virtual node 116. This element has the value 1, because it is part of a field separator. It is to be noted that the geographical shape is not preserved, because the length of the lines between nodes are not taken into account. The relation between the original nodes in the representation of the image and the tessellation grid is stored separately as described below with reference to Figure 17.

The area 109 (Figure 12) is shown in Fig. 14 as a shaded area 122 of elements all being 1.

In the CONN step of the algorithm, the matrix map as generated is subsequently subjected to a connected component process for finding sets of connected elements having a value of 1 in the matrix. Connected component algorithms are widely known in the literature and will therefore not be described here further.

The NODE step of the algorithm is now described in more detail. As an example, Figure 15 shows a single connected area 130 in the matrix of Fig. 14. The matrix shown is based on the tessellation grid as described above, but only connected area 130 as detected by the connected components process is indicated by a shaded area. The constituting elements of the connected area have a value of 1 and are surrounded by elements of a value of zero. In the following steps a field is defined based on a contour around the connected area.

Figure 16 shows the contour 140 of a connected area. The contour is indicated by a shaded area of values 1 around an area having values 0 corresponding to connected area 130. For finding the contour first the area 130 is dilated by one pixel, and then the original area is subtracted.

Figure 17 shows a node matrix. The matrix has the same dimension as the matrix map. The value of the elements is either a node number (between 0 and 19) or empty. The node numbers refer to the nodes in the original image as shown in Figure 12. The contour 140 of connected area 130 derived above, is projected on the node matrix and shown by a shaded area 141.

The node matrix is constructed as follows. Initially, the value of the elements is set to 'empty'. Then actual nodes of field separators are entered into the matrix, e.g. on the basis of the vertex list of the graph.

The task is to extract all nodes belonging to the contour 140 of the area 130. The nodes present in the contour are retrieved by tracing the contour and denoting the nodes therein.

After tracing the contour the nodes are coupled to the original image representation in the FIELD step of the algorithm. If necessary an inverse of the "snap-to-grid" process is applied, and the node numbers are coupled again with the original set of nodes. Finally, if required, the nodes and/or edges of a field are ordered, e.g. in clock wise direction. The ordering may be required for area computation or displaying.

The node extraction and field determination must of course be performed for all fields in the image.

It is noted that areas may enclose each other, which results in disjunct polygons, e.g. a text encirclement. In order to be able to operate on areas, bounded by multiple disjunct polygons, a known technique connecting those polygons is used. The two contours of the polygons are connected by a so-called "zero area bridge", actually 2 line segments, one entering and one leaving the inner contour.

Figure 10 shows a device wherein the method for segmenting a picture in accordance with the present invention is implemented. The device has an input unit 91 for entering a digital image. The input unit may comprise a scanning unit for scanning an image from paper such as an electro-optical scanner, or a digital communication unit for receiving the image from a network like internet, or a playback unit for retrieving digital information from a record carrier like an optical disc drive. The input unit 91 is coupled to a processing unit 94, which cooperates with a memory unit 92. The processing unit may comprise a general purpose computer central processing unit (CPU) and supporting circuits and operates using software for performing the segmentation as described above. In particular, the software includes modules (not separately shown in the Figure) for constructing the tesselation grid by extending the field separators to the outer borders of the image, constructing the basic rectangles and constructing the fields by connecting adjacent basic rectangles that are not separated by a field separator. In addition, the software includes modules for constructing a matrix map representing the tessellation grid and constructing a node matrix related to the nodes in the tessellation grid.

The processing unit may further include a user interface 95 provided with control means such as a keyboard, a mouse device or operator buttons. The output of the processing unit is coupled to a display unit 93. In an embodiment the display unit is a printing unit for outputting a processed image on paper, or a recording unit for storing the segmented image on a record carrier like a magnetic tape or optical disk.

Although the invention has been mainly explained by embodiments a newspaper page as the digital image to be segmented, the invention is also suitable for any digital representation comprising fields on a background, such as electrical circuits in layout images for IC design or streets and buildings on city maps. Further it is noted that the graph as starting point for executing the segmenting by shortest cycles may be constructed differently than the graph described above based on the MWR system. For example a graph may be constructed using tiles as described in the article by Antonacopoulos mentioned above. Further the weight assigned to an edge in the graph is not necessarily the distance. It must be selected to correspond to a contribution to the shortest cycle, for example the weight may be the surface of the tile. It is noted, that in this document the use of the verb 'comprise' and its conjugations does not exclude the presence of other elements or steps than those listed and the word 'a' or 'an' preceding an element does not exclude the presence of a plurality of such elements, that any reference signs do not limit the scope of the claims, that the invention and every unit or means mentioned may be implemented by suitable hardware and/or software and that several 'means' or 'units' may be represented by the same item.

**Claims**

1. Method of segmenting a composite image of pixels into a number of fields corresponding to layout elements of the image, the pixels having a value representing the intensity and/or color of a picture element, which method comprises

   - finding initial field separators corresponding to areas of adjacent pixels of the image, having a predefined property indicative of a background of the image,

   and is **characterized by** the further steps of

   - extending the field separators along at least one separation direction to an outer border of the image,
   - constructing a tesselation grid of lines corresponding to the extended field separators,
   - constructing a set of basic rectangles, a basic rectangle being an area enclosed by lines of the tesselation grid, and
   - constructing the fields by connecting basic rectangles that are adjacent and not separated by an initial field separator.

2. Method as claimed in claim 1, wherein

the step of constructing the set of basic rectangles comprises constructing a matrix map representing the tessellation grid by a two-dimensional array of elements that each represent either a basic rectangle or a line segment of the tessellation grid, an element having a first predefined value for representing a line corresponding to a field separator or a further, different, value for representing a basic rectangle or a line corresponding to an extended field separator.

3. Method as claimed in claim 2, wherein
the step of constructing the fields comprises connecting elements in the matrix map that have said further, different, value.

4. Method as claimed in claim 1, 2 or 3, wherein nodes are defined at points where the field separators connect, and wherein
the step of constructing the fields comprises constructing a node matrix corresponding to the tessellation grid and including elements referring to nodes in the tessellation grid.

5. Method as claimed in claim 4, wherein

- the step of constructing the fields comprises constructing a contour for each area of connected elements in the matrix map and finding the nodes defining the field by projecting the contour on the node matrix.

6. Method as claimed in claim 5, wherein said contour is constructed by dilating the area and subtracting the area of the dilated area.

7. Method as claimed in any of the claims 1 to 6, wherein the segmenting comprises

- constructing a graph, the graph having edges corresponding to areas of adjacent pixels having a predefined property indicative of a background of the image and vertices where the edges connect, and associating field separators to the edges of the graph, and
- forming said tessellation grid by extending the field separators to an outer border of the image.

8. Method as claimed in claim 7, wherein the constructing of the graph comprises cleaning the graph by removing vertices that are connected to less then two edges and/or removing any edges that connect to such vertices.

9. Method as claimed in any of the preceding claims, wherein the method comprises snapping the lines in the tessellation grid to two orthogonal separation directions.

10. Computer program for segmenting an image of pixels into a number of fields, which program is operative to cause a processor to perform the method as claimed in any of the claims 1 to 9.

11. Device for segmenting a composite image of pixels into a number of fields corresponding to layout elements of the image, the pixels having a value representing the intensity and/or color of a picture element, which device comprises

- an input unit (91) for inputting an image, and
- a processing unit (94) for finding initial field separators corresponding to areas of adjacent pixels having a predefined property indicative of a background of the image, **characterized in that** the processing unit (94) is arranged for
- extending the field separators along at least one separation direction to an outer border of the image,
- constructing a tesselation grid of lines corresponding to the (extended) field separators,
- constructing a set of basic rectangles, a basic rectangle being an area enclosed by lines of the tesselation grid, and
- constructing the fields by connecting basic rectangles that are adjacent and not separated by an initial field separator.

12. Device as claimed in claim 11, wherein a processing unit (94) is arranged for

- constructing a matrix map representing the tessellation grid by a two-dimensional array of elements that each represent either a basic rectangle or a line segment of the tessellation grid, an element having a first predefined value for representing a line corresponding to a field separator or a further different value for representing a basic rectangle or a line corresponding to an extended field separator.

**13.** Device as claimed in claim 11 or 12, wherein a processing unit (94) is arranged for

- constructing a node matrix corresponding to the tessellation grid and including elements referring to nodes in the tessellation grid.

**14.** Device as claimed in claim 11, 12 or 13, wherein the device comprises a display unit (93) for displaying fields of the image after segmenting.

**Patentansprüche**

**1.** Verfahren zum Segementieren eines aus Pixeln aufgebauten zusammengesetzten Bildes in eine Anzahl von Feldern, die Layoutelementen des Bildes entsprechen, wobei die Pixel einen Wert haben, der die Intensität und/oder Farbe eines Bildelementes repräsentiert, welches Verfahren umfaßt:

- Auffinden initialer Feldseparatoren, die Gebieten von zusammenhängenden Pixeln des Bildes entsprechen, die eine vordefinierte Eigenschaft haben, die einen Hintergrund des Bildes kennzeichnet,

**gekennzeichnet durch** die weiteren Schritte:

- Verlängern der Feldseparatoren in wenigstens einer Separationsrichtung bis zu einem äußeren Rand des Bildes,
- Konstruktion eines Mosaikgitters aus Linien, die den verlängerten Feldseparatoren entsprechen,
- Konstruktion eines Satzes von Basisrechtecken, wobei ein Basisrechteck eine von Linien des Mosaikgitters umschlossene Fläche ist, und
- Konstruktion der Felder **durch** Verbinden von Basisrechtecken, die einander benachbart sind und nicht **durch** einen initialen Feldseparator getrennt sind.

**2.** Verfahren nach Anspruch 1, bei dem der Schritt der Konstruktion des Satzes von Basisrechtecken die Konstruktion einer Matrixkarte umfaßt, die das Mosaikgitter durch ein zweidimensionales Feld von Elementen repräsentiert, die jeweils entweder ein Basisrechteck oder ein Liniensegment des Mosaikgitters repräsentieren, wobei ein Element einen ersten vordefinierten Wert hat, um eine Linie zu repräsentieren, die einem Feldseparator entspricht, oder einen weiteren, anderen Wert zur Repräsentation eines Basisrechtecks oder einer Linie, die einem verlängerten Feldseparator entspricht.

**3.** Verfahren nach Anspruch 2, bei dem der Schritt der Konstruktion der Felder das Verbinden von Elementen in der Matrixkarte umfaßt, die den genannten weiteren, anderen Wert haben.

**4.** Verfahren nach Anspruch 1, 2 oder 3, bei dem Knoten an Punkten definiert werden, an denen sich die Feldseparatoren vereinigen, wobei der Schritt der Konstruktion der Felder die Konstruktion einer Knotenmatrix umfaßt, die dem Mosaikgitter entspricht und Elemente einschließt, die auf Knoten in dem Mosaikgitter verweisen.

**5.** Verfahren nach Anspruch 4, bei dem

- der Schritt der Konstruktion der Felder die Konstruktion einer Kontur für jede Fläche aus verbundenen Elementen in der Matrixkarte und das Auffinden der das Feld definierenden Knoten durch Projektion der Kontur auf die Knotenmatrix umfaßt.

**6.** Verfahren nach Anspruch 5, bei dem die Kontur konstruiert wird, indem die Fläche gedehnt und die Fläche von der gedehnten Fläche subtrahiert wird.

**7.** Verfahren nach einem der Ansprüche 1 bis 6, bei dem die Segmentierung umfaßt:

- die Konstruktion eines Graphen, der Kanten hat, die Gebieten von benachbarten Pixeln entsprechen, die eine vordefinierte Eigenschaft haben, die für einen Hintergrund des Bildes kennzeichnend ist, sowie von Vertices, wo die Kanten miteinander verbunden sind, und Zuordnen von Feldseparatoren zu den Kanten des Graphen und
- Erzeugen des Mosaikgitters durch Verlängern der Feldseparatoren zu einem äußeren Rand des Bildes.

**8.** Verfahren nach Anspruch 7, bei dem die Konstruktion des Graphen das Säubern des Graphen durch Entfernen von Vertices, die mit weniger als zwei Kanten verbunden sind, und/ oder das Entfernen etwaiger Kanten umfaßt, die mit solchen Vertices verbunden sind.

**9.** Verfahren nach einem der vorstehenden Ansprüche, bei dem das Verfahren das Einrasten der Linien in dem Mosaikgitter in zwei orthogonalen Separationsrichtungen einschließt.

**10.** Computerprogramm zum Segmentieren eines aus Pixeln aufgebauten Bildes in eine Anzahl von Feldern, welches Programm bewirkt, daß ein Prozessor das Verfahren nach einem der Ansprüche 1 bis 9 ausführt.

**11.** Vorrichtung zum Segmentieren eines aus Pixeln aufgebauten zusammengesetzten Bildes in eine Anzahl von Feldern, die Layoutelementen des Bildes entsprechen, wobei die Pixel einen Wert haben, der die Intensität und/oder Farbe eines Bildelements repräsentiert, und welche Vorrichtung aufweist:

   - eine Eingabeeinheit (91) zur Eingabe eines Bildes und
   - eine Verarbeitungseinheit (94) zum Auffinden von initialen Feldseparatoren, die Gebieten von zusammenhängenden Pixeln entsprechen, die eine vorbestimmte Eigenschaft haben, die für einen Hintergrund des Bildes kennzeichnend ist,

   **dadurch gekennzeichnet, daß** die Verarbeitungseinheit (94) dazu ausgebildet ist:

   - die Feldseparatoren in wenigstens einer Separationsrichtung zu einem äußeren Rand des Bildes zu verlängern,
   - ein Mosaikgitter aus Linien zu konstruieren, die den (verlängerten) Feldseparatoren entsprechen,
   - einen Satz von Basisrechtecken zu konstruieren, wobei ein Basisrechteck eine von Linien des Mosaikgitters umschlossene Fläche ist, und
   - die Felder zu konstruieren, indem Basisrechtecke, die aneinander angrenzen und nicht durch einen initialen Feldseparator getrennt sind, miteinander verbunden werden.

**12.** Vorrichtung nach Anspruch 11, bei der eine Verarbeitungseinheit (94) dazu ausgebildet ist,

   - eine Matrixkarte zu konstruieren, die das Mosaikgitter durch ein zweidimensionales Feld aus Elementen repräsentiert, die jeweils ein Basisrechteck oder ein Liniensegment des Mosaikgitters repräsentieren, wobei ein Element einen ersten vordefinierten Wert zur Darstellung einer Linie, die einem Feldseparator entspricht, oder einen weiteren, anderen Wert zur Darstellung eines Basisrechtecks oder einer einem verlängerten Feldseparator entsprechenden Linie hat.

**13.** Vorrichtung nach Anspruch 11 oder 12, bei der eine Verarbeitungseinheit (94) dazu ausgebildet ist,

   - eine Knotenmatrix zu konstruieren, die dem Mosaikgitter entspricht und Elemente enthält, die auf Knoten in dem Mosaikgitter verweisen.

**14.** Vorrichtung nach Anspruch 11, 12 oder 13, bei der die Vorrichtung eine Anzeigeeinheit (93) zum Anzeige von Feldern des Bildes nach der Segmentierung aufweist.

**Revendications**

**1.** Procédé de segmentation d'une image composite de pixels en un certain nombre de champs correspondants aux éléments de structuration de l'image, les pixels ayant une valeur représentative de l'intensité et/ou de la couleur d'un élément d'image, ledit procédé comprenant l'étape consistant à :

   - trouver des séparateurs de champ initiaux correspondants aux zones de pixels adjacents de l'image, ayant une propriété prédéfinie représentative d'un arrière plan de l'image,

   et **caractérisé par** des étapes supplémentaires

   - d'extension des séparateurs de champ suivant au moins une direction de séparation jusqu'à une bordure extérieure de l'image,

- de construction d'une grille de tessellation de lignes correspondantes aux séparateurs de champ étendus,
- de construction d'un ensemble de rectangles de base, un rectangle de base correspondant à une zone entourée de lignes de la grille de tessellation, et
- de construction desdits champs en raccordant des rectangles de base qui sont adjacents et pas séparés par un séparateur de champ initial.

2. Procédé selon la revendication 1, dans lequel
l'étape de construction de l'ensemble des rectangles de base comprend la construction d'une carte matricielle représentant la grille de tessellation au moyen d'un réseau bi-dimensionnel d'éléments représentant chacun soit un rectangle de base soit un segment linéaire de la grille de tessellation, un élément ayant une première valeur prédéfinie pour représenter une ligne correspondant à un séparateur de champ ou une autre valeur différente pour représenter un rectangle de base ou une ligne correspondant à un séparateur de champ agrandi.

3. Procédé selon la revendication 2, dans lequel
l'étape de construction des champs consiste à raccorder des éléments de la carte matricielle ayant ladite autre valeur différente.

4. Procédé selon la revendication 1, 2 ou 3, dans lequel des noeuds sont définis au niveau des points auxquels les séparateurs de champ se raccordent, et dans lequel
l'étape de construction des champs consiste à construire une matrice de noeud correspondant à la grille de tessellation et comprenant des éléments se rapportant à des noeuds de la grille de tessellation.

5. Procédé selon la revendication 4, dans lequel
l'étape de construction des champs consiste à construire un contour pour chaque zone des éléments raccordés de la carte matricielle et à trouver les noeuds délimitant le champ en projetant le contour sur la matrice de noeud.

6. Procédé selon la revendication 5, dans lequel on construit ledit contour en dilatant la zone et en soustrayant la zone de la zone dilatée.

7. Procédé selon l'une quelconque des revendications 1 à 6, dans lequel le procédé de segmentation comprend :

   construire un graphe, le graphe ayant des bords correspondant aux zones de pixels adjacents ayant une propriété prédéfinie représentative d'un arrière plan de l'image et des sommets auxquels les bords se raccordent, et associer des séparateurs de champ aux bords du graphe, et

   former ladite grille de tessellation en agrandissant les séparateurs de champ jusqu'à une bordure extérieure de l'image.

8. Procédé selon la revendication 7, dans lequel la construction du graphe comprend le nettoyage du graphe en éliminant les sommets qui sont raccordés à moins de deux bords et/ou en éliminant n'importe quels bords se raccordant à de tels sommets.

9. Procédé selon l'une quelconque des revendications précédentes, dans lequel le procédé consiste à aligner les lignes de la grille de tessellation sur deux directions de séparation orthogonales.

10. Programme informatique de segmentation d'une image de pixels en un certain nombre de champs, ledit programme fonctionnant pour qu'une unité de traitement mette en oeuvre le procédé tel que revendiqué dans l'une quelconque des revendications 1 à 9.

11. Dispositif de segmentation d'une image composite de pixels en un certain nombre de champs correspondants aux éléments de structuration de l'image, les pixels ayant une valeur représentative de l'intensité et/ou de la couleur d'un élément d'image, ledit dispositif comprenant

   - un périphérique d'entrée (91) permettant d'entrer une image, et
   - une unité de traitement (94) permettant de trouver des séparateurs de champ initiaux correspondants aux zones de pixels adjacents ayant une propriété prédéfinie représentative d'un arrière plan de l'image,

   **caractérisé en ce que** l'unité de traitement (94) est configurée pour

- agrandir les séparateurs de champ suivant au moins une direction de séparation jusqu'à une bordure extérieure de l'image,
- construire une grille de tessellation de lignes correspondantes aux séparateurs de champ (agrandis),
- construire un ensemble de rectangles de base, un rectangle de base correspondant à une zone entourée des lignes de la grille de tessellation, et
- construire les champs en raccordant des rectangles de base qui sont adjacents et pas séparés par un séparateur de champ initial.

12. Dispositif selon la revendication 11, dans lequel une unité de traitement (94) est configurée pour

- construire une carte matricielle représentant la grille de tessellation au moyen d'un réseau bi-dimensionnel d'éléments représentant chacun soit un rectangle de base soit un segment linéaire de la grille de tessellation, un élément ayant une première valeur prédéfinie pour représenter une ligne correspondant à un séparateur de champ ou une autre valeur différente pour représenter un rectangle de base ou une ligne correspondant à un séparateur de champ agrandi.

13. Dispositif selon la revendication 11 ou 12, dans lequel une unité de traitement (94) est configurée pour

- construire une matrice de noeud correspondant à la grille de tessellation et comprenant des éléments se rapportant à des noeuds de la grille de tessellation.

14. Dispositif selon la revendication 11, 12 ou 13, dans lequel le dispositif comprend une unité d'affichage (93) permettant d'afficher des champs de l'image après segmentation.

Fig. 1

**Fig. 2**

**Fig. 3**

**47**

Layout Graph → Fields → Textblock estimation → Line Build

Connected Components → Reading order detection → Reading order → Line Build

**41**   **42**   **43**   **44**   **45**   **46**

# Fig. 4

**53**   **51**   **52**

# Fig. 5

0 10 20 30 40 50 60   x
0
1
2
3
4
y
**61**

0 10 20 30 40 50 60   x
0
1
2
3
4
y
**65**   **62**   **63**   **66**   **64**

# Fig. 6

Fig. 7

Fig. 8

Fig. 9

Fig. 10

SEPAR

95

TESS

96

MATRIX

97

CONN

98

NODE

99

FIELD

100

Fig. 11

Fig. 12

Fig. 13

Fig. 14

| 0 | 0 | 0 | 0 | 0 | 0 | 0 | 0 | 0 |
|---|---|---|---|---|---|---|---|---|
| 0 | 0 | 0 | 1 | 0 | 0 | 0 | 0 | 0 |
| 0 | 0 | 0 | 1 | 0 | 0 | 0 | 0 | 0 |
| 0 | 0 | 0 | 1 | 0 | 0 | 0 | 0 | 0 |
| 0 | 0 | 0 | 1 | 0 | 0 | 0 | 0 | 0 |
| 0 | 0 | 0 | 1 | 0 | 0 | 0 | 0 | 0 |
| 0 | 0 | 0 | 1 | 0 | 0 | 0 | 0 | 0 |
| 0 | 0 | 0 | 1 | 0 | 0 | 0 | 0 | 0 |
| 0 | 0 | 0 | 1 | 1 | 1 | 0 | 0 | 0 |
| 0 | 0 | 0 | 1 | 1 | 1 | 0 | 0 | 0 |
| 0 | 0 | 0 | 1 | 1 | 1 | 0 | 0 | 0 |
| 0 | 0 | 0 | 0 | 0 | 0 | 0 | 0 | 0 |

~130

## Fig. 15

| 0 | 0 | 1 | 1 | 1 | 0 | 0 | 0 | 0 |
|---|---|---|---|---|---|---|---|---|
| 0 | 0 | 1 | 0 | 1 | 0 | 0 | 0 | 0 |
| 0 | 0 | 1 | 0 | 1 | 0 | 0 | 0 | 0 |
| 0 | 0 | 1 | 0 | 1 | 0 | 0 | 0 | 0 |
| 0 | 0 | 1 | 0 | 1 | 0 | 0 | 0 | 0 |
| 0 | 0 | 1 | 0 | 1 | 0 | 0 | 0 | 0 |
| 0 | 0 | 1 | 0 | 1 | 0 | 0 | 0 | 0 |
| 0 | 0 | 1 | 0 | 1 | 1 | 1 | 0 | 0 |
| 0 | 0 | 1 | 0 | 0 | 0 | 1 | 0 | 0 |
| 0 | 0 | 1 | 0 | 0 | 0 | 1 | 0 | 0 |
| 0 | 0 | 1 | 0 | 0 | 0 | 1 | 0 | 0 |
| 0 | 0 | 1 | 1 | 1 | 1 | 1 | 0 | 0 |

~140

## Fig. 16

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 5856877 A

### Non-patent literature cited in the description

• Flexible page segmentation using the background. **A. ANTONACOPOULOS ; R.T RITCHINGS.** Proceedings 12th International Conference on Pattern Recognition, Jerusalem. IEEE-CS Press, 1994, vol. 2, 339-344

• **K.Y. WONG ; R.G. CASEY ; F.M. WAHL.** Document analysis system. *IBM J. Res. Dev,* 1982, vol. 26, 647-656